(19) **Europäisches Patentamt**

**European Patent Office**

**Office européen des brevets**

(11) **EP 1 128 760 B1**

(12) **EUROPÄISCHE PATENTSCHRIFT**

(45) Veröffentlichungstag und Bekanntmachung des Hinweises auf die Patenterteilung:
**27.12.2006 Patentblatt 2006/52**

(21) Anmeldenummer: **99957984.0**

(22) Anmeldetag: **03.11.1999**

(51) Int Cl.:
*A47L 15/44* (2006.01)    *D06F 39/02* (2006.01)
*D06F 39/00* (2006.01)

(86) Internationale Anmeldenummer:
**PCT/EP1999/008384**

(87) Internationale Veröffentlichungsnummer:
**WO 2000/028879 (25.05.2000 Gazette 2000/21)**

(54) **VERFAHREN UND VORRICHTUNG ZUR ERFASSUNG DER MENGE EINES IN EINEM LÖSUNGSSTROM GELÖSTEN PRODUKTS**

METHOD AND DEVICE FOR DETECTING THE QUANTITY OF A PRODUCT DISSOLVED IN A SOLUTION FLOW

PROCEDE ET DISPOSITIF POUR LA DETECTION DE QUANTITES D'UN PRODUIT DISSOUS DANS UN COURANT DE SOLUTION

(84) Benannte Vertragsstaaten:
**AT BE CH CY DE DK ES FI FR GB GR IE IT LI LU MC NL PT SE**

(30) Priorität: **12.11.1998 DE 19852164**

(43) Veröffentlichungstag der Anmeldung:
**05.09.2001 Patentblatt 2001/36**

(73) Patentinhaber: **ECOLAB INC.**
**St. Paul, MN 55102-1390 (US)**

(72) Erfinder:
• **KAMML, Hubert**
**D-83334 Inzell (DE)**
• **AMBERG, Günther**
**D-41472 Neuss (DE)**

(74) Vertreter: **Gesthuysen, von Rohr & Eggert**
**Patentanwälte**
**Postfach 10 13 54**
**45013 Essen (DE)**

(56) Entgegenhaltungen:
| | |
|---|---|
| **EP-A- 0 229 038** | **DE-A- 19 641 742** |
| **US-A- 5 500 050** | **US-A- 5 549 875** |
| **US-A- 5 782 109** | |

EP 1 128 760 B1

**Beschreibung**

Die Erfindung betrifft ein Verfahren zur Erfassung der Menge eines in einem Lösungsstrom bekannter Fließrate und unbekannter und/oder variabler Konzentration gelösten, vorzugsweise pastösen oder pulverförmigen Produkts mit den Merkmalen des Oberbegriffs von Anspruch 1. Weiterhin betrifft die Erfindung eine Vorrichtung zur Durchführung dieses Verfahrens.

Zur Ermittlung der Konzentration eines in einem Lösungsstrom gelösten Produktes ist es bekannt, die Produktkonzentration in dem Lösungsstrom mittels einer Leitfähigkeitsmessung zu ermitteln. Aus der EP 0 229 038 A2 ist ein Verfahren (und eine entsprechende Vorrichtung) zum Spenden einer vorbestimmten Menge einer Chemikalie in einer Lösung von unbekannter oder variabler Konzentration bekannt, bei dem die Bestimmung der Produktkonzentration in dem Lösungsstrom mittels Leitfähigkeitsmessung und Temperaturmessung zum Zwecke der Korrektur der Leitfähigkeitsmessung erfolgt. Aus den gemessenen Leitfähigkeits- und Temperaturwerten wird in einem Rechner unter Heranziehung bekannter Leitfähigkeitskennlinien für das jeweilige Produkt die in dem Lösungsstrom gelöste Produktmenge berechnet. Die errechneten gelösten Produktmengen werden aufsummiert und mit der maximalen für das Verfahren notwendigen Produktmenge verglichen. Sobald die aufgrund der Leitfähigkeitsmessung ermittelte Produktmenge der Produktmenge entspricht, die bei dem zu steuernden Verfahren maximal verbraucht werden darf, wird der Lösungsstrom unterbrochen. Somit ist es mit diesem bekannten Verfahren möglich, die Mengenerfassung und Dosierung eines Produkts für einen bestimmten Verwendungszweck durchzuführen. Aufgrund des Abgleichs der jeweils ermittelten Produktmenge mit einer vorgegebenen maximalen Produktmenge ist die Dosierung jeweils nur mit einer bestimmten, integrierten spezifischen Steuerung einzusetzen.

Bekannt ist auch ein Verfahren (und eine entsprechende Vorrichtung) zur Erfassung der Menge eines gelösten Produkts (US 4,275,448 A), bei dem mittels eines Leitfähigkeitssensors zyklisch die Leitfähigkeit der interessierenden Lösung gemessen wird. Der Leitfähigkeitssensor ist an eine zentrale elektronische Steuerung angeschlossen. Mittels der elektronischen Steuerung wird überwacht, daß die Konzentration der am Leitfähigkeitssensor vorbeiströmenden Lösung möglichst konstant gehalten wird. Wie die Auswertung der Meßwerte des Leitfähigkeitssensors in der elektronischen Steuerung erfolgt, um aus den Leitfähigkeitswerten Konzentrationswerte der Lösung abzuleiten, wird in dieser Veröffentlichung nicht erläutert. Erläutert wird allerdings, daß in einem separaten Meßsystem mittels eines mechanisch arbeitenden Durchflußmessers der Volumenstrom der Lösung erfaßt wird.

Die Verwendung von Leitfähigkeits-/ Konzentrations-Kennlinien in einem Datenspeicher eines Rechners wird auch offenbart in einer Entgegenhaltung, die ein Verfahren zur Dosierung von Weichspülern in Waschmaschinen offenbart (EP 0 741 991 A1). Auch dort wird jedoch insgesamt eine in sich geschlossene, komplette Anordnung beschrieben, die eine integrierte, spezifische Steuerung einsetzt.

Der Lehre liegt das Problem zugrunde, das bekannte Verfahren (und die bekannte Vorrichtung) zur Erfassung der Menge eines in einem Lösungsstrom gelösten Produkts so auszugestalten und weiterzubilden, daß die erfaßte Produktmenge in einer Art aufbereitet und ausgegeben wird, die es erlaubt, das Verfahren besonders variabel einzusetzen und an diskrete, beliebige Steuer- und Auswerteeinheiten anzuschließen.

Die Lehre der vorliegenden Erfindung löst die zuvor beschriebene Problemstellung bei einem Verfahren mit den Merkmalen von Anspruch 1. In vorrichtungsmäßiger Hinsicht wird das zuvor aufgezeigte Problem durch die Merkmale von Anspruch 5 gelöst.

Die Lehre der Erfindung zeichnet sich dadurch aus, daß pro berechneter, vorgegebener Produktmenge von einem Impulsgeber ein Impuls erzeugt wird. Die erzeugten Impulse können als Impulsfolge an irgendeine, beispielsweise handelsübliche Steuer- und Ausgabeeinheit weitergegeben werden. Damit ist die Impulsfolge mit der Impulsfolge bei einer Mengenerfassung mittels normaler Zähler vergleichbar. Die Produktmenge, die notwendig ist, um einen Impuls zu erzeugen, kann im Rechner für jeden Anwendungszweck frei vorgegeben werden. Durch Verwendung dieser einfachen Impulsgeber, die die Impulse wie bei einem normalen Zähler als Impulsfolge ausgeben, ist der apparative Aufwand zur Durchführung dieses Verfahrens gering.

Die Meß- und Berechnungsergebnisse können wie üblich dadurch verbessert werden, daß im Verfahrensschritt b) zusätzlich eine Temperaturkompensation mit einberechnet wird, da die Leitfähigkeit eines Produkts temperaturabhängig ist und die abgespeicherten Leitfähigkeits-/Konzentrations-Kennlinien nur für einige ausgewählte Temperaturen im Datenspeicher hinterlegt sind. Die Einbeziehung der Temperaturkompensation erfolgt dabei vorteilhafterweise nach der nachfolgenden, aus der Konduktometrie bekannten Formel:

$$\chi_\delta = \chi_{25} \times \left[1 + \alpha_{25}/100 \times (\delta - 25)\right]$$

Darin bedeutet:

$\chi_\delta$ = Leitwert bei gemessener Temperatur,

$\chi_{25}$ = Leitwert bei 25°C,

$\alpha_{25}$ = Temperaturkoeffizient des zu messenden Produktes und

$\delta$ = gemessener Temperatur

In einer zweckmäßigen Verfahrensvariante wird der Wasserdurchfluß begrenzt. Dadurch werden die Einflußgrößen auf den Leitwert vermindert. Da lediglich der Leitwert, ggf. mit Temperaturkompensation, zur Bestimmung der Dosiermenge herangezogen wird, erhöht sich hierdurch die Bestimmungsgenauigkeit.

Um mit hinreichender Genauigkeit auch die Produktmengen von Produkten ermitteln zu können, deren Leitfähigkeits-/Konzentrations-Kennlinien nicht im Datenspeicher hinterlegt sind, wird gemäß einer weiteren Ausführungsform der Erfindung im Verfahrensschritt b) zusätzlich ein Korrekturfaktor zur Konzentrationsbestimmung dieser Produkte mit einberechnet.

Weitere Merkmale und Vorteile der Erfindung ergeben sich aus der nachfolgenden Beschreibung und der zugehörigen Zeichnung, in der schematisch der Verfahrensablauf des erfindungsgemäßen Verfahrens dargestellt ist.

In einem Dosiergerät 1 wird ausgehend von einem Lösungsmittel LM, beispielsweise Wasser, und einem vorzugsweise pastösen oder pulverförmigen Produkt P eine Lösung L unbekannter, variabler Konzentration bereitgestellt. Zur Erfassung und Bestimmung der in dem Lösungsstrom bekannter Fließrate enthaltenen Menge des gelösten Produkts P durchfließt die Lösung L eine Leitfähigkeitsmeßzelle 2, die über eine Leitung 3 mit einem Rechner 4 verbunden ist. Der Rechner 4 enthält einen permanenten Datenspeicher. In diesem permanenten Datenspeicher sind Leitfähigkeits-/Konzentrations- Kennlinien 4a verschiedener Produkte gespeichert.

Der von der Leitfähigkeitsmeßzelle 2 ermittelte Leitwert der zu untersuchenden Lösung L wird anhand der zu dem in der Lösung L enthaltenden Produkt P gehörenden Kennlinie 4a die Produktkonzentration des Produkts P in der Lösung L bestimmt. Aufgrund der bekannten Fließrate der Lösung L wird aus der ermittelten Konzentration die aus dem Dosiergerät 1 ausgegebene Produktmenge des Produkts P berechnet. Die berechneten Produktmengen werden im Rechner 4 aufsummiert und immer dann, wenn eine frei vorgebbare Produktmenge erreicht ist, über eine Leitung 5 an einen Impulsgeber 6 übermittelt. Die von dem Impulsgeber 6 pro Produktmenge erzeugten Impulse 7 werden von einem mit dem Impulsgeber 6 verbundenen Impulszähler 8 gezählt.

Zur Verbesserung der Meßergebnisse bzw. Berechnungsergebnisse ist es darüber hinaus möglich, dem Rechner 4 als weitere Berechnungsgröße eine Temperatur T zuzuführen. Die hiermit verbundene Temperaturkompensation dient dazu, die unterschiedlichen Leitwerte des Produkts bei sich ändernden Temperaturen zu berücksichtigen. Weiterhin ist es möglich, dem Rechner 4 einen Korrekturfaktor K zuzuführen, um mit hinreichender Genauigkeit auch die Produktmengen solcher Produkte P ermitteln zu können, deren Kennlinien nicht im Datenspeicher des Rechners 4 gespeichert sind.

Insgesamt zeichnet sich somit das vorstehend beschriebene Verfahren dadurch aus, daß es universell an die unterschiedlichsten Steuerungs- und Auswerteeinheiten anschließbar ist.

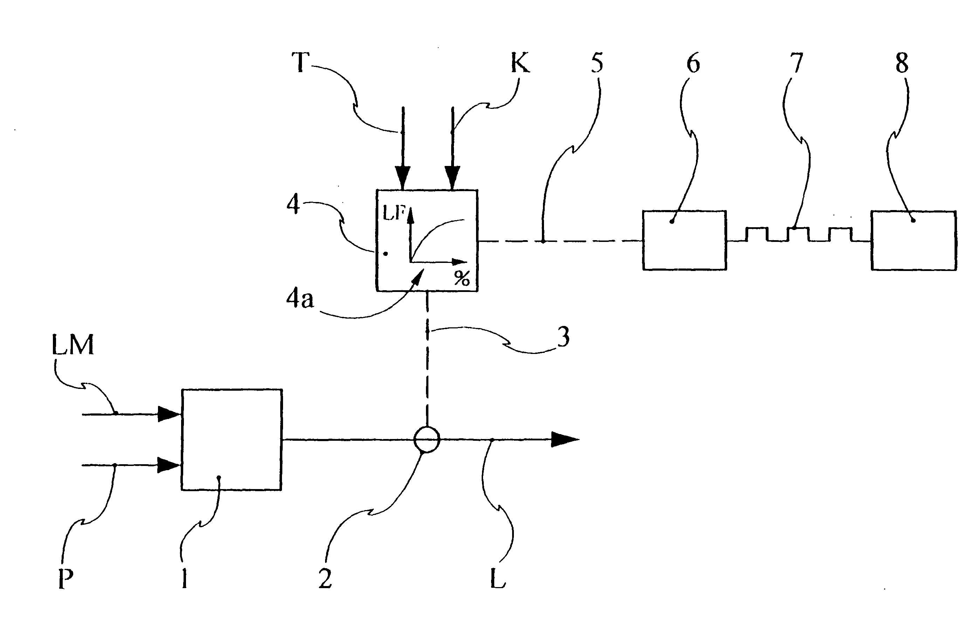

**Patentansprüche**

1. Verfahren zur Erfassung der Menge eines in einem Lösungsstrom bekannter Fließrate und unbekannter und/oder variabler Konzentration gelösten, vorzugsweise pastösen oder pulverförmigen Produkts (P) mit den Verfahrensschritten

   a) zyklisches Messen der Leitfähigkeit der Lösung (L),
   b) Bestimmen der Konzentration (L) durch Abgleich der in Schritt a) gemessenen Leitfähigkeit mit in einem Datenspeicher abgespeicherten Leitfähigkeits-/Konzentrations- Kennlinien (4a),
   c) Berechnen der Produktmenge aus der ermittelten Konzentration der Lösung (L) und der bekannten Fließrate,
   d) Aufsummieren der berechneten Produktmengen,
   e) Vorgeben einer bestimmten Referenz-Produktmenge als Vergleichsangabe für die durch Aufsummieren berechneten Produktmengen,
   f) Erzeugen jeweils eines Impulses (7), sobald durch Aufsummieren der berechneten Produktmengen jeweils die Referenz-Produktmenge erreicht worden ist,
   g) Auswerten der im Verfahrensschritt (F) erzeugten Impulsfolge durch Abzählen der Impulse in irgendeiner Steuerungs- und Auswerteeinheit,
   h) Unterbrechen des Lösungsstroms sobald die Anzahl gezählter Impulse ergibt, daß nun die maximal notwendige Produktmenge dosiert worden ist.

2. Verfahren nach Anspruch 1, **dadurch gekennzeichnet, daß** im Verfahrensschritt b) eine Temperaturkompensation (T) mit einberechnet wird.

3. Verfahren nach Anspruch 1 oder 2, **dadurch gekennzeichnet, daß** die Wasserdurchflußmenge begrenzt wird.

4. Verfahren nach einem der Ansprüche 1 bis 3, **dadurch gekennzeichnet, daß** im Verfahrensschritt b) zusätzlich ein Korrekturfaktor (K) zur Bestimmung der Konzentration von Produkten einberechnet wird, deren Kennlinien nicht im Datenspeicher abgespeichert sind.

5. Vorrichtung zur Durchführung eines Verfahrens zur Erfassung der Menge eines in einem Lösungsstrom bekannter Fließrate und unbekannter und/oder variabler Konzentration gelösten, vorzugsweise pastösen oder pulverförmigen Produkts, nach einem der Ansprüche 1 bis 4,
mit wenigstens einer Leitfähigkeitsmeßzelle (2) und einem Rechner (4) mit permanentem Datenspeicher mit darin abgespeicherten Leitfähigkeits-/ Konzentrations-Kennlinien (4a) zur Auswertung der von der Leitfähigkeitsmeßzelle (2) gemessenen Werte, einen mit dem Rechner (4) verbundenen Impulsgeber (6) zur Erzeugung eines Impulses (7) pro erreichter Referenz-Produktmenge und
einen mit dem Impulsgeber (6) verbundenen Impulszähler (8) irgendeiner Steuerungs- und Auswerteeinheit.

**Claims**

1. Method for detecting the quantity of a preferably pasty or powdered product (P) dissolved in a solution flow of a known flow rate and an unknown and/or variable concentration, with the method steps of

   a) cyclically measuring the conductivity of the solution (L),
   b) determining the concentration (L) by matching the conductivity measured in step a) with conductivity/concentration characteristics (4a) stored in a data memory,
   c) calculating the product quantity from the determined concentration of the solution (L) and the known flow rate,
   d) summating the calculated product quantities,
   e) prescribing a specific reference product quantity as a comparison for the product quantities calculated by summation,
   f) generating a pulse (7) each time, and as soon as, the reference product quantity has been reached by summation of the calculated product quantities,
   g) evaluating the series of pulses generated in method step f) by counting down the pulses in some kind of control and evaluation unit,
   h) interrupting the solution flow as soon as the number of counted pulses shows that the maximum necessary product quantity has been metered.

2. Method according to Claim 1, **characterized in that** in method step b) a temperature compensation (T) is included in the calculation.

3. Method according to Claim 1 or 2, **characterized in that** the quantity of water flowing through is limited.

4. Method according to one of Claims 1 to 3, **characterized in that** in method step b) a correction factor (K) for determining the concentration of products for which no characteristics are stored in the data memory is additionally included in the calculation.

5. Device for carrying out a method for detecting the quantity of a preferably pasty or powdered product dissolved in a solution flow of a known flow rate and an unknown and/or variable concentration, according to one of Claims 1 to 4,
with at least one conductivity measuring cell (2) and a computer (4) with a permanent data memory with conductivity/concentration characteristics (4a) stored in it for the evaluation of the values measured by the conductivity measuring cell (2), a pulse generator (6), connected to the computer (4), for generating a pulse (7) for each reference product quantity achieved and
a pulse counter (8) of some kind of control and evaluation unit, connected to the pulse generator (6).

**Revendications**

1. Procédé de détection de la quantité d'un produit (P), de préférence pâteux ou pulvérulent, dissous dans un écoulement de solution dont le débit d'écoulement est connu et la concentration inconnue et/ou variable, lequel procédé présente les étapes qui consistent à :

   a) mesurer cycliquement la conductivité de la solution (L),
   b) déterminer la concentration (L) en comparant la conductivité mesurée à l'étape a) à des lignes caractéristiques (4a) de conductivité/concentration conservées dans une mémoire de données,
   c) calculer la quantité de produit à partir de la concentration déterminée de la solution (L) et du débit d'écoulement connu,
   d) additionner les quantités de produit calculées,
   e) fixer une quantité définie de référence du produit comme donnée de comparaison pour les quantités de produit calculées par addition,
   f) créer une impulsion (7) chaque fois que la quantité de référence du produit a été atteinte par addition des quantités de produit calculées,
   g) évaluer les successions d'impulsions créées à l'étape (F) par décompte des impulsions dans une quelconque unité de commande et d'évaluation et
   h) interrompre l'écoulement de solution dès que le nombre des impulsions décomptées indique que la quantité maximale nécessaire de produit a été dosée.

2. Procédé selon la revendication 1, **caractérisé en ce qu'**une compensation de température (T) est intégrée dans le calcul de l'étape b).

**3.** Procédé selon la revendication 1 ou 2, **caractérisé en ce que** le débit de passage de l'eau est limité.

**4.** Procédé selon l'une des revendications 1 à 3, **caractérisé en ce que** dans l'étape b), on intègre en plus dans le calcul un facteur de correction (K) qui permet de déterminer la concentration de produits dont les lignes caractéristiques ne sont pas conservées dans la mémoire de données.

**5.** Dispositif en vue de la mise en oeuvre d'un procédé selon l'une des revendications 1 à 4, pour la détection de la quantité d'un produit, de préférence pâteux ou pulvérulent, dissous dans un écoulement de solution dont le débit d'écoulement est connu et la concentration est inconnue et/ou variable,
lequel dispositif présente au moins une cellule (2) de mesure de conductivité et un calculateur (4) qui présente une mémoire permanente de données dans laquelle sont conservées des lignes caractéristiques (4a) de conductivité/concentration qui servent à évaluer les valeurs mesurées par la cellule (2) de mesure de conductivité,
un émetteur d'impulsions (6) relié au calculateur (4) pour créer une impulsion (7) chaque fois qu'une quantité de référence du produit est atteinte et
un compteur d'impulsions (8) relié à l'émetteur d'impulsions (6) d'une quelconque unité de commande et d'évaluation.